# EUROPÄISCHE PATENTANMELDUNG

(11) **EP 4 311 052 A1**
(43) Veröffentlichungstag der Anmeldung: **24.01.2024**
(21) Anmeldenummer: 23185622.0
(22) Anmeldetag: 14.07.2023
(51) Int. Cl.: H02G 9/06, H02G 1/08, H02G 15/08, H02G 3/04, G02B 6/44, H02G 3/06, H02G 3/40, F16L 9/22, F16L 25/14

(54) **KABELSCHUTZROHRSYSTEM, INSBESONDERE FÜR EINE HANGLAGE, UND VERWENDUNG**

(30) Priorität: 17.07.2022 EP 22185343; 18.07.2022 EP 22185582; 08.08.2022 EP 22189317
(71) Anmelder: Symalit AG, 5600 Lenzburg (CH)
(72) Erfinder: Grandchamp, Tim, 8965 Berikon (CH); Villano, Daniele, 5412 Gebenstorf (CH); Bachmann, Sven, 5600 Lenzburg (CH); Binder, Christian, 79725 Laufenburg-Grunholz (DE)
(74) Vertreter: Schmauder & Partner AG Patent- & Markenanwälte VSP

(57) **Zusammenfassung**

Ein Kabelschutzrohrsystem (2), insbesondere für eine Hanglage, ist gebildet aus einer Mehrzahl von miteinander verbundenen Rohrelementen (5a, 5b, 5c, 5d, 5e) aus Kunststoff, welche einen durchgehenden Rohrkanal für eine oder mehrere Leitungen bilden, wobei der Rohrkanal einen Innendurchmesser von 45 mm bis 400 mm aufweist. Zur Kompensation von Umgebungsverschiebungen umfasst der Rohrkanal eine Mehrzahl von Kompensationselementen (6a, 6b, 6c), wobei ein jedes Kompensationselement als längenvariables Rohrsegment oder als teleskopierbares Rohrsegment ausgebildet ist. Ein zwischen zwei, an entgegengesetzten Seiten eines Kompensationselementes befindlichen, Stellen (8a, 8b) des Rohrkanals definierter Axialabstand (L1, L2) ist über eine Wirklänge (Lw) variierbar, wobei die Wirklänge mindestens 35 cm beträgt.

## Beschreibung

### Technisches Gebiet

Die Erfindung betrifft ein Kabelschutzrohrsystem nach dem Oberbegriff des Patentanspruchs 1 sowie eine Verwendung des Kabelschutzrohrsystems und eine geschützte Kabelleitung.

### Stand der Technik

Kabelschutzrohre werden für den Schutz von Strom- und Telekommunikationsleitungen vor mechanischen Einwirkungen, aber auch als Leerrohre für zukünftig einzuziehende Leitungen, eingesetzt.

Insbesondere der Energiebedarf von Einrichtungen und Bauten in abgelegenen und teileweise auch exponierten Lagen, aber auch deren Bedarf an Telekommunikationsverbindungen, haben in jüngerer Vergangenheit kontinuierlich zugenommen. Damit einhergehend besteht ein zunehmender Bedarf an Kabelschutzrohrsystemen, die beispielsweise für den Einsatz in Bergregionen und insbesondere in Hanglagen geeignet sind. Eine besondere Herausforderung sind Hanglagen mit einer Permafrostbodenschicht, die in den kommenden Jahren auftauen könnte. Die dabei auftretenden Bodenbewegungen führen bei den herkömmlichen Kabelschutzrohrsystemen zu Beschädigungen, die nicht nur einen Wegfall der mechanischen Schutzfunktion, sondern auch zu Kabelbrüchen und/oder Kabelbeschädigungen führen können.

Leitungen sind bereits jetzt in verschiedenen Hanglagen unter mechanischer Spannung. Lösungsoptionen für die longitudinale Kompensation von Strom- und Telekommunikationskabeln sind bereits vorhanden. Die vorliegende Erfindung löst das Problem, dass nun auch die Kabelschutzrohrsysteme zu einer longitudinalen Kompensation fähig sind.

Die WO 90/04157 betrifft ein Pumpsystem für flüssige Produkte wie Benzin, Dieselkraftstoff und Chemikalien, das eine Pumpe zum Pumpen dieser Produkte von einem Lagertank durch eine primäre Rohrleitung zu einem Produktspender umfasst. Ein sekundäres Eindämmungssystem weist ein sekundäres Rohrsystem auf, welches die primäre Rohrleitung umgibt. Das sekundäre Rohrsystem umfasst mindestens ein Paar ineinander verschiebbarer Rohrabschnitte mit unterschiedlichen Durchmessern, die um die primäre Rohrleitung herum installiert werden und vor der endgültigen Installation zwischen Zwischen- und Endpositionen bewegbar sind, um die Fertigstellung, Prüfung und Inspektion der primären Rohrleitung vor der endgültigen Fertigstellung des sekundären Eindämmungssystems zu ermöglichen. Eine Verwendung als Kabelschutzrohr ist weder vorgesehen noch umsetzbar.

Die CH 713450 B1 betrifft eine Rohrmuffe zur Verbindung zweier Rohrenden von Installationsrohren für elektrische Kabel im Bauwesen. Die Rohrmuffe umfasst ein erstes Rohrelement, das in das erste Rohrende schiebbar ist. Sie umfasst weiter ein zweites Rohrelement, das über das zweite Rohrende schiebbar ist, wobei ein Verbindungselement das zweite Rohrelement mit dem ersten Rohrelement verbindet und sich vom zweiten Rohrelement zum ersten Rohrelement hin kegelförmig verjüngt. Eine Kompensation von Längenveränderungen ist nicht vorgesehen.

Die EP 3024102 A1 betrifft ein flexibles Kabelschutzrohr, mit mehreren ineinandergesteckten Rohrsegmenten, wobei die Rohrsegmente zueinander axial längenveränderlich und/oder tangential winkelveränderbar ausgebildet sind. Jedes Rohrsegment weist ferner einen Umfangswulst sowie einen Anschlag auf.

### Darstellung der Erfindung

Aufgabe der Erfindung ist es, ein Kabelschutzrohrsystem bereit zu stellen, welches insbesondere für die Verwendung in Hanglagen geeignet ist.

Diese Aufgabe wird durch ein Kabelschutzrohrsystem mit den Merkmalen des Patentanspruchs 1 gelöst. Das erfindungsgemässe Kabelschutzrohrsystem ist aus einer Mehrzahl von miteinander verbundenen Rohrelementen aus Kunststoff gebildet, welche einen durchgehenden Rohrkanal für eine oder mehrere Leitungen bilden. Der Rohrkanal weist einen Innendurchmesser von 45 mm bis 400 mm auf. Dadurch, dass der Rohrkanal eine Mehrzahl von Kompensationselementen umfasst, ist das Kabelschutzrohr zur Kompensation von Umgebungsbewegungen, insbesondere von Lateralbewegungen, aber auch von Longitudinalbewegungen des Untergrundes bzw. der Hanglage geeignet. Erfindungsgemäss ist ein jedes Kompensationselement als längenvariables Rohrsegment oder als teleskopierbares Rohrsegment ausgebildet, wobei ein zwischen zwei, an entgegengesetzten Seiten eines Kompensationselementes befindlichen, Stellen des Rohrkanals definierter Axialabstand über eine Wirklänge Lw variierbar ist, wobei die Wirklänge mindestens 35 cm beträgt. Der hier definierte Begriff der "Wirklänge" gibt also den Variabilitätsbereich der Länge eines Kompensationselementes an.

Das erfindungsgemässe Kabelrohrsystem ist nach dem Verlegen imstande, eine Längenveränderung durchzuführen. Eine solche Längenveränderung ist auch noch Jahre nach dem Einbau möglich.

Der Begriff "Kabelrohrsystem" ist im fachüblichen Sinn als eine Gesamtheit von zusammenwirkenden Bauteilen zu verstehen, die zur Aufnahme mindestens eines Leitungskabels oder -kabelstranges geeignet ist, wobei es sich insbesondere um Strom- oder Telekommunikationsleitungen handeln kann.

Der Begriff "Rohrsegment" ist im vorliegenden Zusammenhang als funktionelle Einheit des Rohrkanals zu verstehen. Ein bestimmtes Rohrsegment ist zwar ein Abschnitt des Rohrkanals, aber es besteht nicht notwendigerweise aus einem einzelnen Rohrelement, sondern es kann auch aus mehreren zusammenwirkenden Rohrelementen bestehen, wie nachfolgend noch näher erläutert wird.

Der Begriff "längenvariabel" bezieht sich auf ein Rohrsegment, welches aufgrund seiner Materialbeschaffenheit oder Formgebung in einer Axialrichtung auseinanderziehbar und zusammenstossbar ist.

Der Begriff "teleskopierbar" bezieht sich auf ein Rohrsegment, welche zumindest ein Paar von teleskopartig gegeneinander verschiebbare Rohrelemente umfasst.

Die einzelnen Rohrelemente werden aus einem für die Verwendung als Kabelschutzrohr geeigneten Kunststoff, insbesondere aus einem Polyolefin wie beispielsweise Polyethylen, ein Polyethylen-Blend oder ein Polyethylen-Copolymer, gefertigt.

Die Rohrelemente bzw. der daraus gebildete Rohrkanal haben in aller Regel einen im Wesentlichen kreisrunden Querschnitt und insbesondere eine im Wesentlichen kreisrunde innere Öffnung. Mit "im Wesentlichen" wird zum Ausdruck gebracht, dass die erwähnten Formen nicht im streng geometrischen Sinn, sondern im Kontext der grundsätzlich bekannten Verformbarkeiten und Masstoleranzen zu verstehen sind.

Die Wandstärke der verschiedenen Komponenten des erfindungsgemässen Kabelschutzrohrsystems bewegen sich grundsätzlich im fachmännisch bekannten Rahmen und liegen somit, auch abhängig vom Rohrdurchmesser, im Bereich von 1.5 bis 15 mm, insbesondere 3 bis 11 mm.

Bevorzugte Ausgestaltungen des Kabelschutzrohrsystems sind in den abhängigen Ansprüchen definiert.

Gemäss einer ersten Ausgestaltung (Anspruch 2) ist mindestens ein Kompensationselement als längenvariables Rohrsegment in Form
- eines Wickelrohrs oder
- eines Gliederrohrs oder
- eines Wellrohrs
ausgebildet.

Vorteilhafterweise (Anspruch 3), ist mindestens ein Kompensationselement als längenvariables Rohrsegment in Form eines Wickelrohrs ausgebildet, welches einen um eine Rohrachse in Windungen verlaufenden Wandstreifen mit einer Fusskante und einer Kopfkante umfasst, wobei die Fusskante und die Kopfkante derart profiliert sind, dass benachbarte Kantenbereiche aufeinander folgender Windungen miteinander steckverbindbar sind, wobei zwischen steckverbundenen Kantenbereichen ein über eine Längsstrecke variabler Abstand und optional ein in einem Winkelbereich variabler Schwenkwinkel einstellbar ist.

Gemäss einer weiteren Ausgestaltung (Anspruch 4), ist mindestens ein Kompensationselement als teleskopierbares Rohrsegment aus zumindest zwei zusammenwirkenden Rohrelementen ausgebildet, wovon ein erstes Rohrelement einen über eine erste Abschnittslänge aufgeweiteten ersten Endabschnitt aufweist, in welchem ein nicht aufgeweiteter Endabschnitt eines zweiten Rohrelementes längsverschieblich aufgenommen ist.

In gewissen Ausführungsformen (Anspruch 5), beträgt die erste Wirklänge mindestens 1 m, insbesondere mindestens 3 m, ganz besonders mindestens 5 m.

In einer weiteren Ausgestaltung (Anspruch 6), weist das erste Rohrelement einen über eine zweite Abschnittslänge aufgeweiteten zweiten Endabschnitt auf, in welchem ein nicht aufgeweiteter Endabschnitt eines dritten Rohrelementes längsverschieblich aufgenommen ist.

In gewissen Ausführungsformen (Anspruch 7), grenzen der aufgeweitete erste Endabschnitt und der aufgeweitete zweite Endabschnitt direkt aneinander.

Vorteilhaft ist es überdies (Anspruch 8), wenn das Kabelschutzrohrsystem mit einem innenseitig angebrachten Längenmarkierungen oder Längsmessstreifen ausgestattet ist. Damit lässt sich, beispielsweise mittels eines geeigneten Kamerasystems, eine Überprüfung bzw. Verfolgung von erfindungsgemäss vorgesehenen bzw. erwarteten Längsverschiebungen einzelner Rohrsegmente vornehmen.

Es versteht sich, dass sich übermässigem Auseinanderziehen von teleskopierbaren Rohrsegmenten die betreffenden Rohrelemente ausser Eingriff gelangen. Damit dies nicht in unerwünschter Weise, beispielsweise beim Verlegen des Kabelschutzrohrsystems geschieht, ist es vorteilhaft (Anspruch 9), wenn zwischen gegenseitig längsverschieblichen Teilen eine endständige Arretierung vorhanden ist. Dabei kann es sich durchaus um eine lösbare Ausführungsform handeln.

Vorteilhaft ist es überdies (Anspruch 10), wenn zwischen gegenseitig längsverschieblichen Teilen ein langwirkendes, d.h. ein nicht eintrocknendes und sich nicht abbauendes Gleitmittel angebracht ist. Beispiele solcher Gleitmittel sind mineralölbasierte Gleitmittel wie Vaseline. Im Gegensatz zur vorliegenden Erfindung, bei der eine dauerhafte Gleitwirkung für die Funktion von teleskopierbaren Bauteilen erwünscht ist, werden bei herkömmlichen Kabelschutzrohrsystemen kurz wirksame Gleitmittel verwendet, da die Gleitwirkung nur beim Zusammenbau einzelner Komponenten erforderlich ist.

Bei manchen Ausführungsformen (Anspruch 11) ist der Rohrkanal durch mindestens eine Kabelschachtbox geführt. Derartige Boxen bzw. kammerartige Bauteile sind insbesondere vorgesehen, um eine Strom- oder Telekommunikationsleitung in ein Kabelschutzrohrsystem erheblicher Länge einzuziehen, aber auch zum Anschliessen etwaiger Abzweigungen. In der Regel wird zunächst jede Kabelschachtbox an einer zugewiesenen Stelle entlang einer vorgesehenen Kabelleitung im Gelände positioniert in den Grund eingebaut.

Grundsätzlich kann das erfindungsgemässe Kabelschutzrohrsystem oberirdisch verlegt werden. Insbesondere beim Verlegen in Hanglagen wird eine entsprechende Fixierung bzw. Stützung der Rohrelemente erforderlich sein. In zahlreichen weiteren Ausführungsformen (Anspruch 12), ist jedoch das Kabelschutzrohrsystem zumindest teilweise im Untergrund eingebaut. Insbesondere in unwegsamen alpinen Umgebungen ist die Einbauweise entlang des Kabelschutzrohrsystems an die unmittelbaren Gegebenheiten des Geländes (z.B. Felsstruktur, Geröllpartie, Permafrostboden, etc.) anzupassen.

In noch weiteren Ausführungsformen (Anspruch 13), ist das Kabelschutzrohrsystem freiliegend oder hängend angeordnet.

Ein weiterer Aspekt (Anspruch 14) betrifft die Verwendung des erfindungsgemässen Kabelschutzrohrsystems zur Aufnahme einer Kabelleitung, die quer zu einer Hanglage verläuft. Damit soll die aufgenommene Kabelleitung insbesondere vor lateralen Umgebungsverschiebungen, insbesondere vor talwärts gerichteten Hangbewegungen geschützt werden. Derartige Hangbewegungen treten unter anderem bei sich aufweichendem Permafrostboden auf.

Noch ein weiterer Aspekt (Anspruch 15) betrifft eine geschützte Kabelleitung mit einem ersten Leitungsende und einem zweiten Leitungsende, wobei das erste Leitungsende mit einer zugehörigen ersten Anschlussstelle verbunden ist, und wobei das zweite Leitungsende mit einer zugehörigen zweiten Anschlussstelle verbunden ist, wobei sich die erste Anschlussstelle und die zweite Anschlussstelle an voneinander beabstandeten Geländepunkten befinden, wobei zumindest ein im Freien befindlicher Teil der Kabelleitung in einem erfindungsgemässen Kabelschutzrohrsystem aufgenommen ist.. Der Abstand zwischen benachbarten Anschlussstellen beträgt typischerweise ungefähr 80 m bis ungefähr 250 m, wobei insgesamt Strecken von 500 m bis 2000 m überbrückt werden können.

### Kurze Beschreibung der Zeichnungen

Ausführungsbeispiele der Erfindung werden nachfolgend anhand der Zeichnungen näher beschrieben, dabei zeigen:
- Fig. 1: ein in einer Bodenstruktur eingebautes Kabelschutzrohrsystem, in einer vertikalen Schnittdarstellung, a) nach dem Einbau, und b) nach einer Bodenabsenkung;
- Fig. 2: ein Teil eines Kabelschutzrohrsystems, a) in einer vergleichsweise kurzen Längsstellung, und b) in einer vergleichsweise langen Längsstellung;
- Fig. 3: ein Kompensationselement mit Wickelrohr, in maximal auseinander gezogenem Zustand;
- Fig. 4: das Kompensationselement von Fig. 3, in minimal auseinander gezogenem Zustand;
- Fig. 5: ein Kompensationselement mit Gliederrohr, in minimal auseinander gezogenem Zustand;
- Fig. 6: das Kompensationselement von Fig. 5, in zerlegtem Zustand;
- Fig. 7: ein Kompensationselement mit Wellrohr;
- Fig. 8: eine erste Ausführungsform eines teleskopierbaren Kompensationselementes in zwei unterschiedlich auseinander gezogenen Zuständen;
- Fig. 9: eine zweite Ausführungsform eines teleskopierbaren Kompensationselementes in zwei unterschiedlich auseinander gezogenen Zuständen;
- Fig. 10: einen Ausschnitt eines durch Kabelschachtboxen geführten Kabelschutzrohrsystems; und
- Fig. 11: eine geschützte Kabelleitung, eingebaut in einer Hanglage, in einer schematischen Darstellung,
a) in einer anfänglichen Hangsituation; und
b) nach einer lateralen Hangverschiebung mit vergrösserter Gesamtlänge.

### Wege zur Ausführung der Erfindung

Im nachfolgenden Text und in den zugehörigen Figuren werden funktionell übereinstimmende Elemente mit denselben Bezugszeichen bezeichnet und dementsprechend nicht bei jeder weiteren Figur neu erläutert.

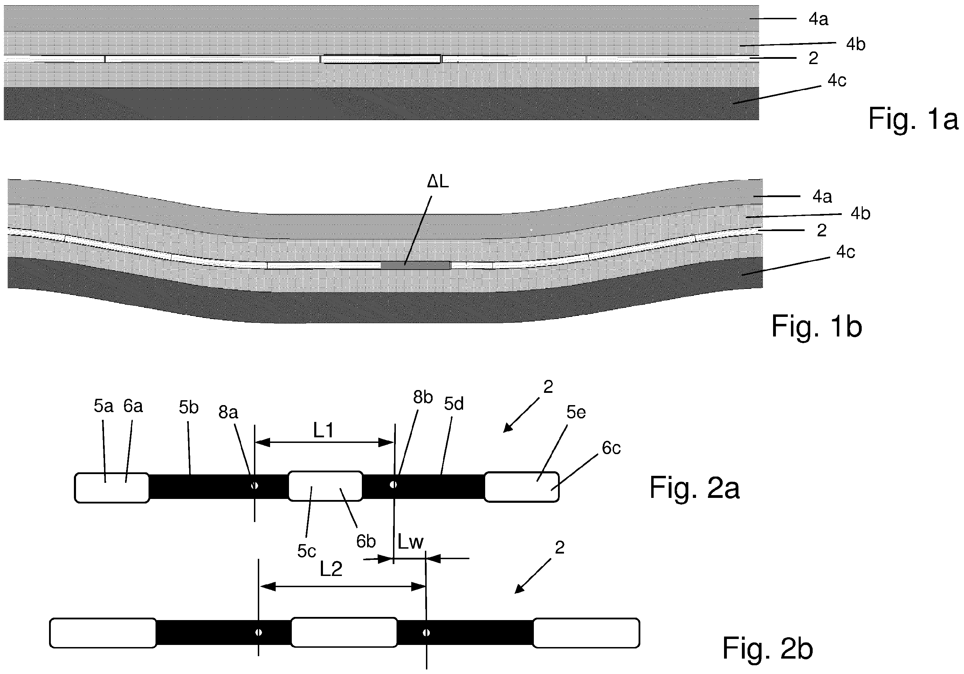

Die Fig. 1a und 1b zeigen schematisch die Funktionsweise eines insgesamt als 2 bezeichneten Kabelschutzrohrsystems, welches in einer beispielhaft aus drei Schichten 4a, 4b und 4c gebildeten Bodenstruktur eingebaut ist. Im Fall einer Bodenabsenkung findet ein Übergang von der Situation gemäss Fig. 1a zu derjenigen von Fig. 1b statt. Um die bezüglich der Längsachse des Kabelschutzrohrsystems laterale Verschiebung, welche einen Übergang von einem geraden in einen gebogenen Rohrabschnitt und damit zu einer Streckenverlängerung führt, kann sich das Kabelschutzrohrsystem um eine schematisch als ΔL bezeichnete Strecke verlängern.

Die Fig. 2a und 2b zeigen schematisch einen Ausschnitt aus einem Kabelschutzrohrsystem, gebildet aus einer Mehrzahl von miteinander verbundenen Rohrelementen aus Kunststoff, welche einen durchgehenden Rohrkanal für ein hier nicht dargestelltes Kabel bilden. Zur Kompensation von Umgebungsverschiebungen sind Kompensationselemente 6a, 6b, 6c vorhanden. Wie am mittleren Kompensationselement 6b anhand der Fig. 2a und 2b veranschaulicht, ist ein zwischen zwei, an entgegengesetzten Seiten des Kompensationselementes befindlichen Stellen 8a und 8b des Rohrkanals definierter Axialabstand L1 bzw. L2 variierbar. Die maximale Abstandsvariation, d.h. die Differenz zwischen dem kleinstmöglichen und dem grösstmöglichen Axialabstand wird als Wirklänge Lw definiert. Erfindungsgemäss beträgt die Wirklänge mindestens 35 cm. Die in der Fig. 2a mit Lw bezeichnete Strecke entspricht der Wirklänge, sofern die Strecke L1 dem minimalen Axialabstand entspricht und sofern L2 dem maximalen Axialabstand entspricht.

Die Wahl der beiden Stellen 8a und 8b entlang des jeweiligen Rohrabschnitts, der hier schwarz dargestellt ist, ist willkürlich, und dementsprechend sind es auch die hier als L1 und L2 dargestellten Axialabstände. Demgegenüber ist die Variation der Axialabstände und damit auch die Wirklänge Lw nicht von der Wahl der beiden Stellen 8a und 8b abhängig.

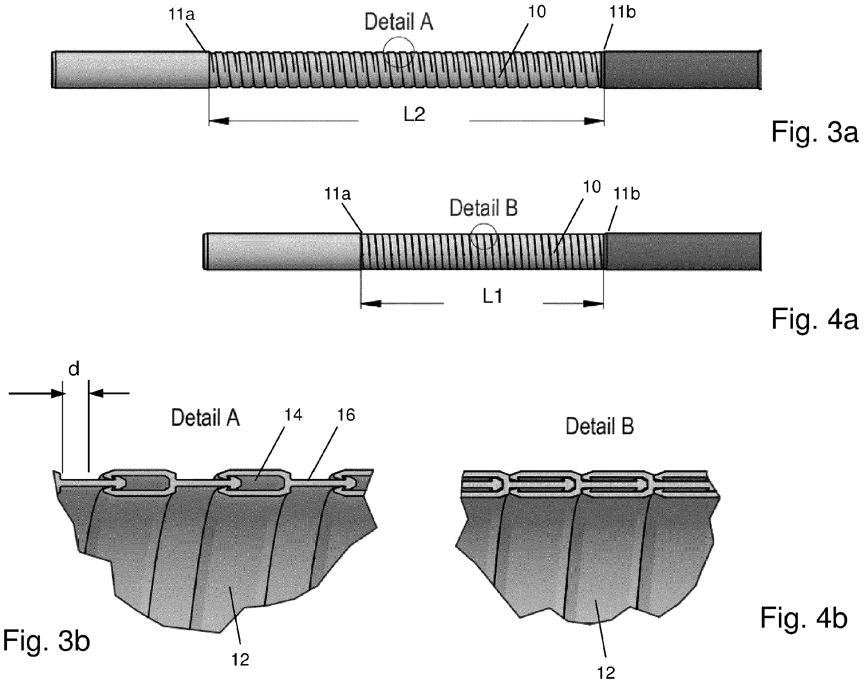

Die Fig. 3a, 3b, 4a und 4b zeigen ein Kompensationselement mit einem Rohrsegment in Form eines Wickelrohrs 10. Dieses umfasst einen um eine Rohrachse in Windungen verlaufenden Wandstreifen 12 mit einer Fusskante 14 und einer Kopfkante 16. Die Fusskante und die Kopfkante sind derart profiliert, dass benachbarte Kantenbereiche aufeinander folgender Windungen miteinander steckverbindbar sind, wobei zwischen steckverbundenen Kantenbereichen ein über eine Längsstrecke variabler Abstand d einstellbar ist. Optional und hier nicht näher dargestellt, könnte auch ein in einem Winkelbereich variabler Schwenkwinkel vorgesehen werden. Das Wickelrohr 10 ist an seinen beiden Enden mit je einem anschliessenden glatten Rohr 11a, 11b verschweisst.

In einer beispielhaften Ausführungsform hat das Wickelrohr eine minimale Länge L1 = 1'000 mm und eine maximale Länge L2 = 1'350 mm, was einer Wirklänge Lw = 350 mm entspricht. Der Abstand d zwischen steckverbundenen Kantenbereichen ist von 0 bis 7 mm variierbar.

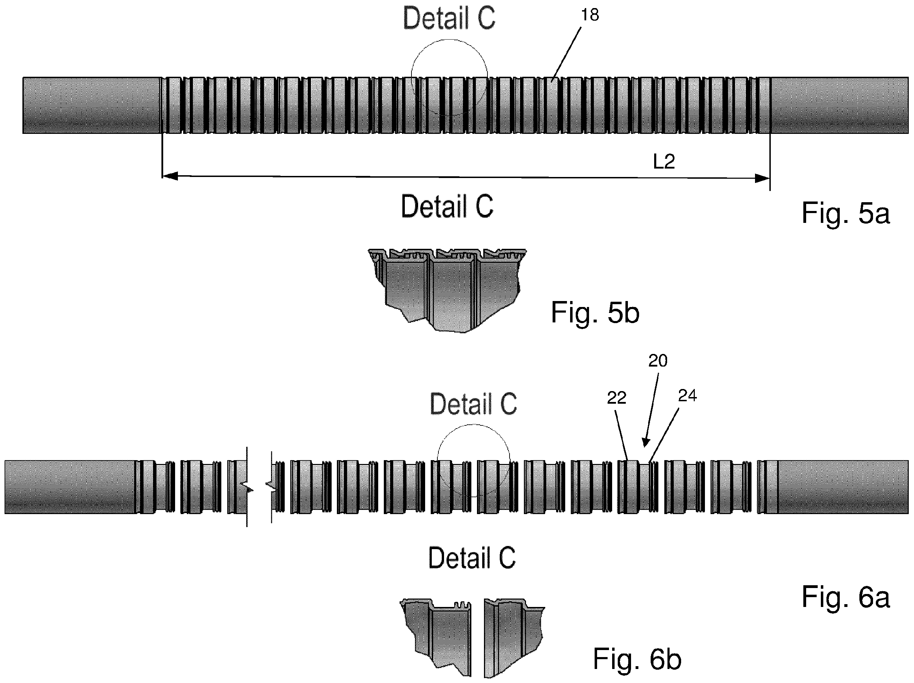

Die Fig. 5a, 5b, 6a und 6b zeigen ein Kompensationselement mit einem Rohrsegment in Form eines Gliederrohrs 18. Diese umfasst einzelne Rohrsegmente 20, die über zusammenwirkende Endabschnitte 22, 24 abstandsvariabel miteinander verbunden sind.

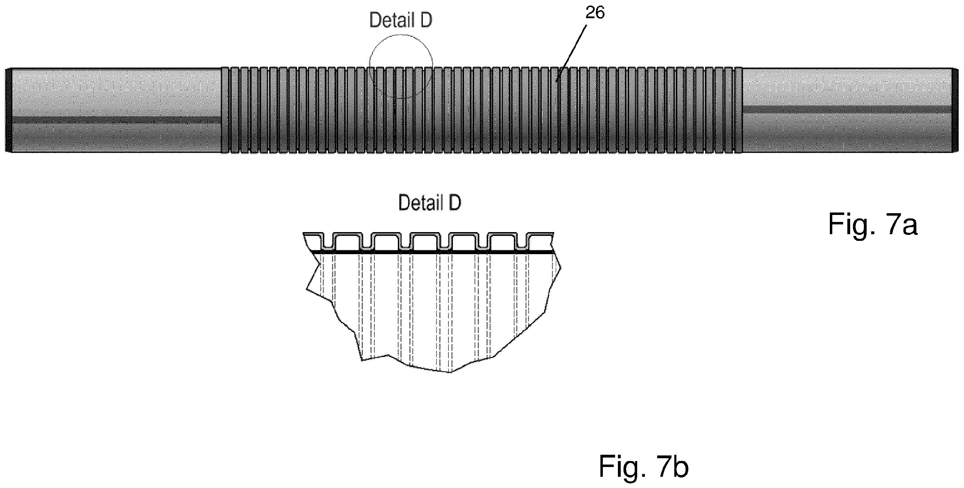

Die Fig. 7a und 7b zeigen ein Kompensationselement mit einem Rohrsegment in Form eines Wellrohrs 26. Dieses ist so konfiguriert, dass die Form des wellenartig profilierten Mantels veränderbar ist und somit eine variable axiale Gesamtlänge einstellbar ist.

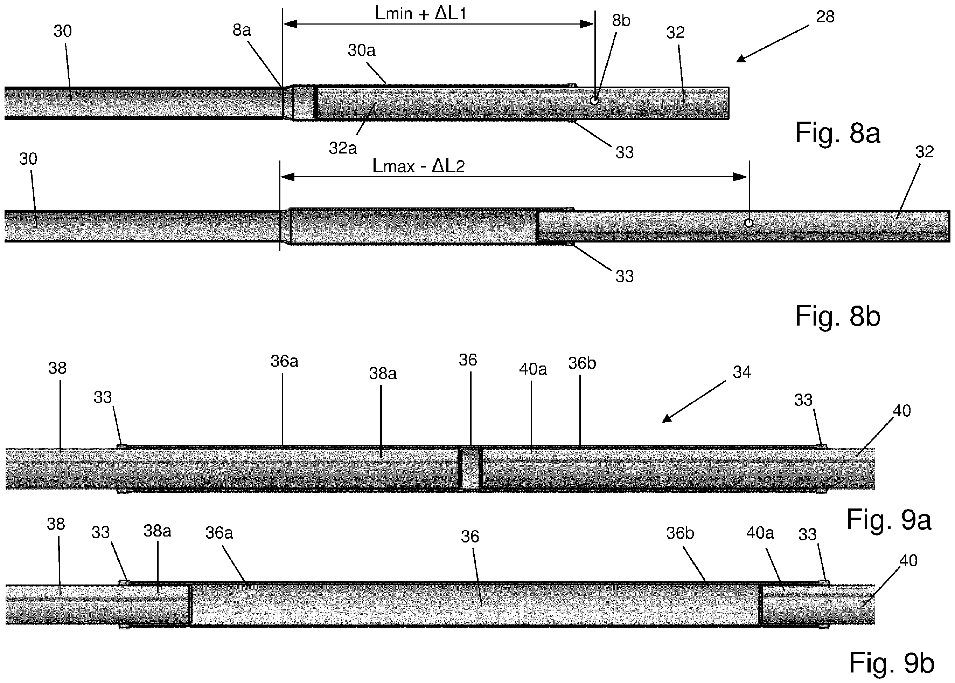

Die Fig. 8a und 8b zeigen ein Kompensationselement mit einem teleskopierbaren Rohrsegment 28 aus zwei zusammenwirkenden Rohrelementen 30, 32. Das erste Rohrelement 30 weist einen über eine erste Abschnittslänge aufgeweiteten ersten Endabschnitt 30a auf, in welchem ein nicht aufgeweiteter Endabschnitt 32a des zweiten Rohrelementes 32 längsverschieblich aufgenommen ist. Die Fig. 8a und 8b zeigen Situationen, in denen der axiale Abstand zwischen zwei Rohrstellen 8a und 8b annähernd minimal bzw. annähernd maximal ist. Eine solche Einschubsituation ist in der Praxis durchaus als Anfangssituation nach dem Verbau gebräuchlich, da sie eine Längenkompensation in beiden Richtungen erlaubt. Bei vollständiger Ausschöpfung der Längenverschiebung ergäbe sich ein minimaler Abstand Lmin und ein maximaler Abstand Lmax. Dementsprechend beträgt die Wirklänge des gezeigten Kompensationselementes Lw = Lmax - Lmin.

Das Ende des aufgeweiteten ersten Endabschnitts 30a ist vorteilhafterweise mit einer daran angeschweissten Einfahrmanschette 33 versehen. Diese ist mit einer inneren Nut zur Aufnahme eines hier nicht dargestellten Dichtrings zur Abdichtung des Rohrinneren ausgestattet.

In einer beispielhaften Ausführungsform haben die einzelnen Rohrelemente 30, 32 eine Länge von 10 m. In gewissen Ausführungsformen davon hat der aufgeweitete Endabschnitt eine Länge von 3 m und einen restlichen, nicht aufgeweiteten Abschnitt mit einer Länge von 7 m. Daraus ergibt sich eine Wirklänge von 3 m. In anderen Ausführungsformen hat der nicht aufgeweitete Endabschnitt eine Länge von annähernd 5 m.

Die Fig. 9a und 9b zeigen ein Kompensationselement mit einem teleskopierbaren Rohrsegment 34 aus drei zusammenwirkenden Rohrelementen 36, 38, 40. Das erste Rohrelement 36 weist einen über eine erste Abschnittslänge aufgeweiteten ersten Endabschnitt 36a auf, in welchem ein nicht aufgeweiteter Endabschnitt 38a des zweiten Rohrelementes 38 längsverschieblich aufgenommen ist. Ausserdem weist das erste Rohrelement 36 einen über eine zweite Abschnittslänge aufgeweiteten zweiten Endabschnitt 36b auf, in welchem ein nicht aufgeweiteter Endabschnitt 40a des dritten Rohrelementes 40 längsverschieblich aufgenommen ist. Im gezeigten Beispiel grenzen der aufgeweitete erste Endabschnitt 36a und der aufgeweitete zweite Endabschnitt 36b direkt aneinander. Die jeweiligen Enden der aufgeweiteten Endabschnitte 36a, 36b sind vorteilhafterweise mit einer daran angeschweissten Einfahrmanschette 33 versehen. Diese ist mit einer inneren Nut zur Aufnahme eines hier nicht dargestellten Dichtrings ausgestattet.

In einer beispielhaften Ausführungsform hat das erste Rohrelement 36 eine Länge von 10 m und die beiden aufgeweiteten Endabschnitte 36a, 36b grenzen direkt aneinander. Daraus ergibt sich eine Wirklänge von 10 m.

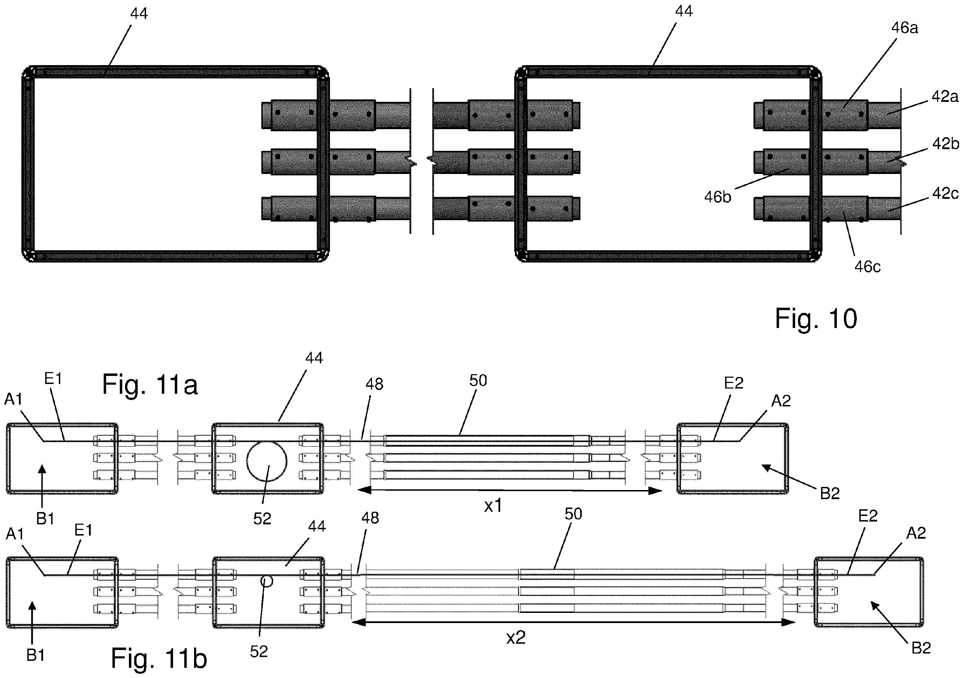

Die Fig. 10 zeigt ein Kabelschutzrohrsystem mit drei parallel geführten Kabelschutzrohren 42a, 42b, 42c, wobei jeder Rohrkanal durch eine Kabelschachtbox 44 geführt ist. Im gezeigten Beispiel sind die einzelnen Kabelschutzrohre mittels jeweils zwei Elektro-Schweissmuffen 46a, 46b, 46c mit der Kabelschachtbox 44 verbunden.

Die in den Fig. 11a und 11b dargestellte geschützte Kabelleitung 48 hat ein erstes Leitungsende E1 und ein zweites Leitungsende E2, wobei das erste Leitungsende E1 mit einer zugehörigen ersten Anschlussstelle A1 verbunden und das zweite Leitungsende E2 mit einer zugehörigen zweiten Anschlussstelle A2 verbunden ist. Wie aus der Figur ersichtlich, befinden sich die erste Anschlussstelle A1 und die zweite Anschlussstelle A2 an voneinander beabstandeten Geländepunkten B1 bzw. B2, wobei mittels einer dazwischen vorhandenen Kabelschachtbox 44 eine Zwischenverankerung vorliegt. Zumindest ein im Freien befindlicher Abschnitt 50 der Kabelleitung 48, hier nur beispielhaft gezeigt, ist in einem Kabelschutzrohrsystem 2 aufgenommen.

Die Fig. 11a zeigt eine anfängliche Hangsituation, beispielsweise unmittelbar nach Einbau der Kabelleitung. Es liegt eine anfängliche Distanz zwischen den Leitungsenden E1 und E2 vor.

Die Fig. 11b zeigt beispielhaft die Situation nach einer lateralen Verschiebung im Hanggelände, wodurch die Distanz zwischen den Leitungsenden E1 und E2 vergrössert hat.

Zur Kompensation dieser Längenverschiebung muss sich einerseits die effektive Kabellänge vergrössern. Dies wird erreicht, indem eine anfänglich als Reserve angelegte Kabelschlaufe 52 verringert wird, wie aus dem Vergleich der Fig. 11a und 11b ersichtlich wird. Ausserdem wird erfindungsgemäss die effektive Länge des Kabelschutzrohres entsprechend vergrössert. Im gezeigten Beispiel wird dies durch die unterschiedlichen Längen x1 und x2 des Abschnitts 50 erreicht.

### Ausführungsbeispiel

Ein Kabelschutzrohrsystem mit drei parallel geführten Kabelschutzrohren von je ca. 560 m zum Einbau in eine alpine Hanglage umfasst folgende Komponenten:
- 84 Stk. ä 10 Meter: PE-HD Kabelrohr ohne Muffe, 112 × 100 mm
- 42 Stk. ä 10 Meter: PE-HD Kabelrohr ohne Muffe, 132 × 120 mm
- 150 Stk. Elektro-Schweissmuffen 112 × 100 × 250 mm
- 75 Stk. Elektro-Schweissmuffen 132 × 120 × 250 mm
- 44 Stk. ä 7/3 Meter: Rohrelement für teleskopierbares Kompensationselement, 112 × 100
- 22 Stk. ä 7/3 Meter: Rohrelement für teleskopierbares Kompensationselement, 132 × 120
- 4 Stk. Kabelschächte
- 4 Stk. Schachtabdeckungen zu Kabelschachtbox

## Patentansprüche

1. Kabelschutzrohrsystem (2), insbesondere für eine Hanglage, gebildet aus einer Mehrzahl von miteinander verbundenen Rohrelementen (5a, 5b, 5c, 5d, 5e) aus Kunststoff, welche einen durchgehenden Rohrkanal für ein Kabel bilden, wobei der Rohrkanal einen Innendurchmesser von 45 mm bis 400 mm aufweist, **dadurch gekennzeichnet, dass** der Rohrkanal zur Kompensation von Umgebungsverschiebungen eine Mehrzahl von Kompensationselementen (6a, 6b, 6c) umfasst, wobei ein jedes Kompensationselement als längenvariables Rohrsegment oder als teleskopierbares Rohrsegment ausgebildet ist, wobei ein zwischen zwei, an entgegengesetzten Seiten eines Kompensationselementes befindlichen, Stellen (8a, 8b) des Rohrkanals definierter Axialabstand (L1, L2) über eine Wirklänge (Lw) variierbar ist, wobei die Wirklänge mindestens 35 cm beträgt.

2. Kabelschutzrohrsystem nach Anspruch 1, wobei mindestens ein Kompensationselement als längenvariables Rohrsegment in Form eines Wickelrohrs (10) oder eines Gliederrohrs (18) oder eines Wellrohrs (26) ausgebildet ist.

3. Kabelschutzrohr nach Anspruch 2, wobei mindestens ein Kompensationselement als längenvariables Rohrsegment in Form eines Wickelrohrs (10) ausgebildet ist, welches einen um eine Rohrachse in Windungen verlaufenden Wandstreifen (12) mit einer Fusskante (14) und einer Kopfkante (16) umfasst, wobei die Fusskante und die Kopfkante derart profiliert sind, dass benachbarte Kantenbereiche aufeinander folgender Windungen miteinander steckverbindbar sind, wobei zwischen steckverbundenen Kantenbereichen ein über eine Längsstrecke variabler Abstand (d) und optional ein in einem Winkelbereich variabler Schwenkwinkel einstellbar ist.

4. Kabelschutzrohrsystem nach Anspruch 1, wobei mindestens ein Kompensationselement als teleskopierbares Rohrsegment (28) aus zumindest zwei zusammenwirkenden Rohrelementen (30, 32) ausgebildet ist, wovon ein erstes Rohrelement (30) einen über eine erste Abschnittslänge aufgeweiteten ersten Endabschnitt (30a) aufweist, in welchem ein nicht aufgeweiteter Endabschnitt (32a) eines zweiten Rohrelementes (32) längsverschieblich aufgenommen ist.

5. Kabelschutzrohrsystem nach Anspruch 4, wobei die erste Abschnittslänge mindestens 1 m, insbesondere mindestens 3 m, ganz besonders mindestens 5 m beträgt.

6. Kabelschutzrohrsystem nach Anspruch 4, wobei das erste Rohrelement (36) einen über eine zweite Abschnittslänge aufgeweiteten zweiten Endabschnitt (36b) aufweist, in welchem ein nicht aufgeweiteter Endabschnitt (40a) eines dritten Rohrelementes (40) längsverschieblich aufgenommen ist.

7. Kabelschutzrohrsystem nach Anspruch 6, wobei der aufgeweitete erste Endabschnitt (36a) und der aufgeweitete zweite Endabschnitt (36b) aneinander grenzen.

8. Kabelschutzrohrsystem nach einem der Ansprüche 4 bis 7, mit einem innenseitig angebrachten Längenmessstreifen.

9. Kabelschutzrohrsystem nach einem der Ansprüche 4 bis 8, wobei zwischen gegenseitig längsverschieblichen Teilen eine endständige Arretierung vorhanden ist.

10. Kabelschutzrohrsystem nach einem der Ansprüche 4 bis 9, wobei zwischen gegenseitig längsverschieblichen Teilen ein langwirkendes Gleitmittel angebracht ist.

11. Kabelschutzrohrsystem nach einem der Ansprüche 1 bis 10, wobei der Rohrkanal durch mindestens eine Kabelschachtbox (44) geführt ist.

12. Kabelschutzrohrsystem nach einem der Ansprüche 1 bis 11, welches zumindest teilweise im Untergrund, insbesondere in einer Hanglage, eingebaut ist.

13. Kabelschutzrohrsystem nach einem der Ansprüche 1 bis 11, welches freiliegend oder hängend angeordnet ist.

14. Verwendung eines Kabelschutzrohrsystems nach einem der Ansprüche 1 bis 13, zur Aufnahme einer Kabelleitung, die quer zu einer Hanglage verläuft.

15. Geschützte Kabelleitung (48), mit einem ersten Leitungsende (E1) und einem zweiten Leitungsende (E2), wobei das erste Leitungsende (E1) mit einer zugehörigen ersten Anschlussstelle (A1) verbunden ist, und wobei das zweite Leitungsende (E2) mit einer zugehörigen zweiten Anschlussstelle (A2) verbunden ist, wobei sich die erste Anschlussstelle (A1) und die zweite Anschlussstelle (A2) an voneinander beabstandeten Geländepunkten befinden, **dadurch gekennzeichnet, dass** zumindest ein im Freien befindlicher Teil der Kabelleitung in einem Kabelschutzrohrsystem (2) nach einem der Ansprüche 1 bis 13 aufgenommen ist.
